Europäisches Patentamt

European Patent Office

Office européen des brevets

(11) Publication number : **0 438 251 A1**

## (12) EUROPEAN PATENT APPLICATION

(21) Application number : **91300247.3**

(22) Date of filing : **14.01.91**

(51) Int. Cl.⁵ : **B01D 53/26, B01D 45/00,
F25B 43/02**

(30) Priority : **13.01.90 GB 9000793**

(43) Date of publication of application :
**24.07.91 Bulletin 91/30**

(84) Designated Contracting States :
**DE GB NL**

(71) Applicant : **DEWRAMET ENGINEERING
LIMITED**
**York House, Mossland Road
Hillington, Glasgow G52 4UD, Scotland (GB)**

(72) Inventor : **MacFarlane, Walter Preston**
**5 Broom Road**
**Newton Mearns Glasgow G77 5DP (GB)**

(74) Representative : **Horner, Martin Grenville et al**
**Cruikshank & Fairweather 19 Royal Exchange
Square**
**Glasgow G1 3AE Scotland (GB)**

(54) Gas/liquid separator.

(57) A separator for separating oil from recirculating refrigerant gas in a refrigeration system, wherein the oil is in the form of liquid streams and entrained droplets and constitutes up to 10% by volume of the flow, comprises a chamber (12) having a deflector baffle (10) which is V-shaped in transverse section so as to efficiently collect the liquid stream, followed by an axial flow cyclone separator (2) for removal of any residual entrained liquid droplets.

EP 0 438 251 A1

FIG.1

## GAS/LIQUID SEPARATOR

The present invention relates to a separator for removing liquid streams and droplets from a gaseous flow, particularly but not exclusively for use in refrigeration apparatus.

Refrigeration apparatus used for refrigerators and air conditioners employs a compressor for compressing the refrigerant gas. The compressor is usually of the reciprocating, rotary vane or screw type. In order to lubricate the compressor and to provide gas sealing and cooling, a lubricating oil is included in the refrigerant fluid, which has to be recovered from the refrigerant fluid downstream of the compressor. In the case of reciprocating compressors, only relatively small amounts of lubricating oil (typically less than 0.01% by volume) are carried over with the compressed gas. However, with rotary vane and screw compressors, very much larger flows of lubricating oil in the form of both heavy liquid streams and suspended droplets (typically up to 10% by volume) pass out through the compressor discharge and these must be immediately recovered from the compressed gas and returned to the compressor suction inlet. The lubricating oil is generally present in the compressed refrigerant gas in the form of liquid streams, droplets, mists or aerosols.

Oil separators hitherto used in the refrigeration industry have mostly been low velocity settlers or have used coalescer baffles. Whilst being fairly bulky, they have been adequate for use with reciprocating compressors. Following the Montreal protocol concerning restrictions on the use of certain ozone-depleting chlorofluorocarbons, the refrigeration industry is switching to less environmentally harmful refrigeration gases, such as refrigerant 22. However, conventional piston compressors cannot achieve the low suction gas temperature required for low temperature refrigeration (minus 25°C and below) requirements. Rotary vane compressors are, however, particularly advantageous for low temperature refrigeration. However, there is a need for a compact separator capable of separating relatively large quantities of lubricating oil carried over in the compressed gas. Conventional low velocity settlers would be too bulky for many applications, for example refrigeration and air conditioning units on vehicles.

British patent specification GB888237 discloses an oil separator having a helical vane which imparts a swirling motion to the gas prior to impinging on a concave baffle. Patent specification GB1433313 discloses a steam separator having a diverter fitting in the form of a pipe of circular cross-section. U.S. patent specification U.S. 4036615 discloses a mist separator comprising a series of baffle plates in a cruciform arrangement.

British Patent specifications GB978274 and 1473099 disclose centrifugal separators for separating liquid droplets from gaseous flows. Both employ an axial-flow cyclone arrangement which spins the gas by means of inclined deflector plates, whereby the liquid droplets are separated centrifugally.

It is an object of the present invention to provide a separator, particularly a separator which is suitable for use with the axial flow cyclones disclosed in the above mentioned British patent specification, which is reasonably compact and able to handle the relatively large lubricating oil carry over encountered with rotary vane or screw type compressors.

A first aspect of the present invention provides a separator for removing liquid streams and droplets from a gaseous flow, which comprises :

     – a chamber having a gas inlet, a liquid outlet, and a gas outlet above the liquid outlet ;

     – a baffle depending from an upper end of the chamber for diverting incoming gas from the inlet through substantially a right angle, the baffle in transverse section being substantially V-shaped so as to define an upstanding channel facing the incoming gas wherein liquid removed from the gaseous flow collects before dropping to the bottom of the chamber and leaving through the liquid outlet, and the gas exiting through the gas outlet; and

     – an axial flow cyclone separator arranged downstream of the gas outlet for substantial removal of residual liquid droplets entrained in the gaseous flow.

The entrained liquid particles may be in the form of streams, droplets, aerosols, mists or otherwise in a liquid state so as to be susceptible to separation by centrifuging. Typically the liquid constitutes 5 to 10% by volume of the gaseous flow.

Generally, the gas inlet and gas outlet are substantially axially aligned for ease of installation in pipework. The baffle depending from the upper end of the chamber diverts the incoming gas through substantially a right angle, for example in the range 80 to 100°, the precise angle being unimportant. The effect of diverting the incoming gas is to cause liquid streams or droplets to impact on the baffle by virtue of their momentum and thus to be collected in the upstanding channel. The baffle is V-shaped in transverse section, which is more efficient in collecting and concentrating the liquid into a single stream than, for example, a circular cross-section. The pressure of the incoming gas flow tends to force the liquid collected on the baffle towards the channel where it is collected, so that re-entrainment is minimised. The collected liquid drops from the lower end of the baffle and the lower end of the baffle might taper to a point to further assist concentration of the liquid.

In order to optimise the collection of liquid on the baffle, it is preferred that the separator be constructed so as to provide for a streamline substantially non-turbulent flow as the incoming gas is diverted through substantially a right angle by the baffle.

Although not strictly necessary, further improvement in separation can be achieved by including a coalescer plate across the flow path, usually between the gas inlet and the baffle. Coalescers are known in the art (see GB978274) and usually comprise a perforate plate or mesh (for example, knitmesh).

The baffle is usually effective to remove the majority of the liquid stream and effects a preliminary separation prior to passing the gaseous flow through the axial flow cyclone separator.

In the axial-flow cyclone separator, gas from the gas outlet is given a swirling motion by means of deflector plates, such as to separate any remaining entrained liquid droplets by centrifugal force. The collected liquid from the cyclone is usually combined with the liquid collected from the baffle, possibly by means of a venturi in the liquid outlet to create a pressure drop to suck liquid from the cyclone outlet.

An embodiment of the present invention will now be described by way of example only with reference to the drawing wherein ;

Figure 1 is a cross-sectional elevation of a separator and an axial-flow cyclone, and

Figure 2 is a horizontal cross-section along II-II showing the baffle cross-section.

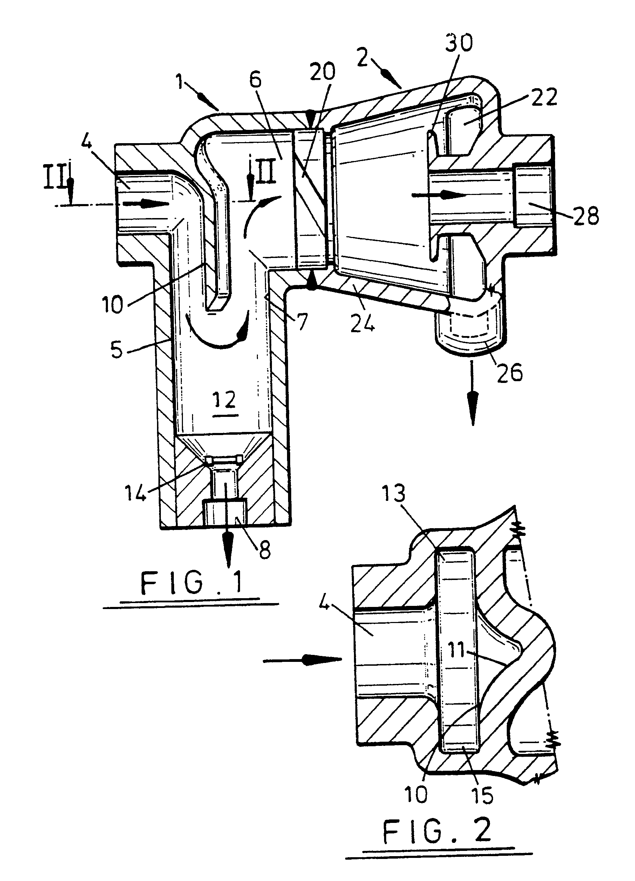

Figure 1 shows a separator 1 welded upstream of a cyclone 2. The separator comprises a gas inlet 4, a gas outlet 6 and a liquid outlet 8. A baffle 10 depends from the upper end of chamber 12 and is arranged closer to the chamber wall 5 than to the opposite chamber wall 7, such that the gas flow velocity down the channel side of the baffle is greater than up the rear of the baffle so as to assist collection of the liquid in the channel and to minimise re-entrainment of collected liquid. The baffle extends transversely entirely across the chamber so as to divert the gas flow as shown by the arrows. The baffle is V-shaped in horizontal cross-section so as to define a channel 11 facing the incoming gas flow. The upper end of the chamber is shaped so that the incoming gas flow follows a streamlined non-turbulent path as it is diverted through 90° by the baffle.

A permanent magnet 14 is arranged above the liquid outlet to remove magnetisable metal particles from the recirculating oil. The transverse width of the baffle is greater than the width of the gas inlet such as to define edge regions 13, 15 to accommodate in part the cleaned gas flow.

The axial-flow cyclone separator 2 comprises a series of radially-extending angled deflector plates 20 which impart a rotating motion to the gas flow. Liquid centrifuged from the gas is collected in a volute 22 in casing 24 of the cyclone and exits through a second liquid outlet 26, which may be connected to the first liquid outlet 8. Clean gas then exits through cyclone gas outlet 28. A radially extending collar 30 around the gas outlet helps prevent re-entrainment of liquid in the exiting gas in known manner (see GB978274).

Typically, the arrangement shown in Figure 1 is fitted into a mobile refrigeration system, downstream of a rotary vane or screw compressor. The axial arrangement of the inlets and outlets facilitates installation. Refrigerant gas laden with lubricating oil streams or droplets enters through inlet 4 and is diverted in a streamlined flow through substantially 90° by the baffle. The V-section of the baffle causes the liquid collected on the walls to be forced into the central outstanding channel by pressure of incoming gas, so that liquid droplets fall from the lower end of the baffle and are collected at liquid outlet 8. Gas substantially free of bulk liquid passes around the lower edges of the baffle. Its reduced velocity here minimises re-entrainment. Collected lubricating oil passes magnet 14 where magnetisable metal particles are removed and exits through liquid outlet 8 to be recirculated to the inlet of the compressor. The gas then passes into the axial flow cyclone where and remaining suspended liquid droplets are substantially spun out of the gas flow and leave through the cyclone liquid outlet to be recirculated to the suction side of the compressor. Cleaned refrigerant gas then leaves through outlet 28 to follow the remainder of the refrigeration cycle. It has been found in tests that up to 95% of the lubrication oil can be removed in the first separator stage, with the remaining 5% removed in the second cyclone stage. The arrangement is compact and suitable for use in vehicle refrigeration or air conditioning systems where conventional separators of a size able to cope with the volume of lubricating oil would be too large. In order to cope with the pressures of the gaseous refrigeration gas (typically around 200 psi.) a conventional low velocity settling vessel would also be extremely heavy.

## Claims

1.  A separator for removing liquid streams and droplets from a gaseous flow, which comprises ;
    − a chamber (12) having a gas inlet (4), a liquid outlet (8), and a gas outlet (6) above the liquid outlet ;
    − a baffle (10) depending from an upper end of the chamber for diverting incoming gas from the inlet through substantially a right angle, the baffle in transverse section being substantially V-shaped so as to define an upstanding channel (11) facing the incoming gas wherein liquid removed from the gaseous flow collects before dropping to the bottom of the chamber and leaving through the liquid outlet, and the gas exiting through the gas outlet ; and
– an axial flow cyclone separator (2) arranged downstream of the gas outlet for substantial removal of residual liquid droplets entrained in the gaseous flow.

2.  A separator according to claim 1 wherein the gas inlet (4) and gas outlet (6) are axially aligned.

3.  A separator according to any preceding claim wherein the baffle (10) is located closer to the inlet side (5) of the chamber than to the outlet side (7), such that the gas velocity along the front face of the baffle including the channel is greater than along the rear face of the baffle.

4.  A separator according to any preceding claim wherein the transverse width of the baffle is greater than the width of the gas inlet, so as to define flowpath edge regions (13,15) to accommodate in part the cleaned gas flow.

5.  A separator according to any preceding claim wherein the base of the chamber adjacent the liquid outlet constitutes a reservoir of volume sufficient to contain liquid removed from a gaseous flow wherein the liquid comprises 5 to 10% by volume of the gaseous flow.

6.  A refrigerator system which comprises a rotary compressor and a separator according to any preceding claim.

FIG.1

FIG.2

## EUROPEAN SEARCH REPORT

**European Patent Office**

Application Number

EP 91 30 0247

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3 140 342 (W. KALTENHALER et al.) --- | | B 01 D 53/26 |
| A | FR-A-2 548 041 (FLAKT ENTREPRISE) --- | | B 01 D 45/00 |
| A | US-A-4 257 793 (MAKOTO KIMISHIMA) --- | | F 25 B 43/02 |
| A | US-A-4 472 949 (HIDEHIKO FUJISAWA et al.) ----- | | |
| | | | **TECHNICAL FIELDS SEARCHED (Int. Cl.5)** B 01 D F 25 B |

The present search report has been drawn up for all claims

| Place of search | Date of completion of the search | Examiner |
|---|---|---|
| THE HAGUE | 28-02-1991 | PYFFEROEN K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)